# EUROPEAN PATENT APPLICATION

(11) **EP 3 549 763 A1**
(43) Date of publication of application: **09.10.2019**
(21) Application number: 18166167.9
(22) Date of filing: 06.04.2018
(51) Int. Cl.: B32B 27/08, B32B 3/02, B32B 3/04, B32B 5/12, H04M 1/02

(54) **THIN, HIGH-STIFFNESS LAMINATES, PORTABLE ELECTRONIC DEVICE HOUSINGS INCLUDING THE SAME, AND METHODS FOR MAKING SUCH LAMINATES AND PORTABLE ELECTRONIC DEVICE HOUSINGS**

(71) Applicant: SABIC Global Technologies B.V., 4612 PX Bergen op Zoom (NL)
(72) Inventor: KASHIF, Syed Muhammad, 4612 PX Bergen op Zoom (NL); THEOFANOUS, Theofanis, 4612 PX Bergen op Zoom (NL); VERGHESE, Nikhil, 4612 PX Bergen op Zoom (NL)
(74) Representative: J A Kemp

(57) **Abstract**

The present disclosure includes thin, high-stiffness laminates, portable electronic device housings including the same, and methods for making such laminates and portable electronic device housings. Some laminates include an inner section having one or more first laminae and one or more second laminae, and first and second outer sections disposed on opposing sides of the inner section, each having one or more third laminae. The laminate has a width and a length that is perpendicular to the width. Each of the first lamina(e) can have fibers aligned in a direction parallel to the length, each of the second lamina(e) can have fibers aligned in a direction parallel to the width, and each of the third lamina(e) can have fibers aligned in a direction angularly disposed at an angle of at least 10 degrees to each of the length and the width.

## Description

### FIELD OF INVENTION

The present invention relates generally to fiber-reinforced composites, and more specifically, to thin, high-stiffness laminates that may be suitable for use in a variety of applications, including portable electronic device (e.g., laptop) housings.

### BACKGROUND

Fiber-reinforced composites can be used to form structures having advantageous structural characteristics, such as high stiffnesses and high strengths, as well as relatively low weights, when compared to similar structures formed from conventional materials. As a result, fiber-reinforced composites are used in a variety of applications across a range of industries, including the automotive, aerospace, and consumer electronics industries.

In many applications, the use of fiber-reinforced composites to increase the stiffness of a structure can be limited by the size, weight, and/or cost requirements of the structure. For example, a typical portable electronic device includes a housing for receiving components (e.g., a screen, processor, board, user-input device, other component, and/or the like) of the device that needs to be sufficiently stiff to protect the components against damage, while being relatively small (e.g., thin-walled), light, and inexpensive. Fiber-reinforced composites for use in such applications that are sufficiently thin may not be as stiff as desired, and those that are as stiff as desired may not be sufficiently thin.

### SUMMARY

Some embodiments of the present laminates can address these needs by having a relatively small thickness as well as a relatively high resistance to deflection. In some laminates, such advantageous structural characteristics can be achieved by using a layup that includes an inner section having (1) one or more unidirectional first laminae, each having fibers that are aligned with the length of the laminate, and (2) one or more unidirectional second laminae, each having fibers that are aligned with the width of the laminate. Some laminates can have first and second outer sections disposed on opposing sides of the inner section, each having one or more unidirectional third laminae, where each of the third lamina(e) has fibers that are aligned in a direction angularly disposed relative to each of the length and the width. Providing such third lamina(e) in addition to the first and second laminae may improve resistance to shear deformations, thereby permitting some of the present laminates to have an even smaller thickness while maintaining a relatively high resistance to deflection.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of" what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the apparatuses, systems, and methods can consist of or consist essentially of - rather than comprise/have/include - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1A** is a schematic top view of a first embodiment of the present laminates.
**FIG. 1B** is a schematic cross-sectional side view of the laminate of FIG. 1A, taken along line 1B-1B of FIG. 1A.
**FIG. 1C** is a schematic cross-sectional end view of the laminate of FIG. 1A, taken along line 1C-1C of FIG. 1A.
**FIG. ID** is a schematic exploded view of the laminate of FIG. 1A.
**FIG. IE** is a schematic sectional perspective view of the laminate of FIG. 1A.
**FIG. IF** is a schematic top view of one of the third laminae of the laminate of FIG. 1A.
**FIGs. 2A-2C** are schematic top-views of, respectively, a second, third, and fourth embodiment of the present laminates wherein, for each embodiment, one or more third lamina(e) are positioned within the bounds of a border portion of the laminate.
**FIG. 3** is a schematic top view of a lamina which may be suitable for use in some of the present laminates.
**FIG. 4** is a schematic top view of a lamina formed from sections of unidirectional fiber tape, which may be suitable for use in some of the present laminates.
**FIG. 5** is a schematic perspective view of one embodiment of the present laptop housings that includes one or more of the present laminates.
**FIG. 6A** is a schematic bottom view of the A cover of the laptop housing of FIG. 5.
**FIG. 6B** is a schematic cross-sectional end view of the A cover of FIG. 6A, taken along line 6B-6B of FIG. 6A.
**FIGs. 7A** and **7B** depict conditions for simulating deflections of a laminate or a metal plate in response to a load.
**FIG. 8** is a graph showing the thickness and weight of different laminates (including the laminate of FIG. 1A) and metal plates that exhibit the same maximum deflection when subjected to the conditions of FIGs. 7A and 7B, where the thickness and weight of each of the laminates and plates are normalized with reference to an aluminum plate.

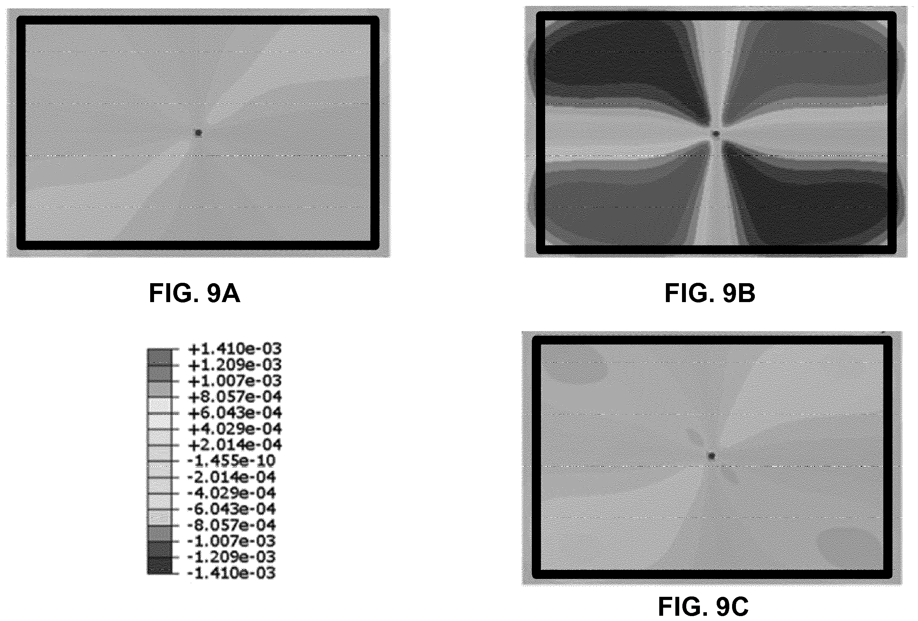

**FIGs. 9A** and **9B** are shear strain fields of, respectively, an aluminum plate, a reference laminate, and the laminate of FIG. 1A when each is subjected to the conditions of FIGs. 7A and 7B.

### DETAILED DESCRIPTION

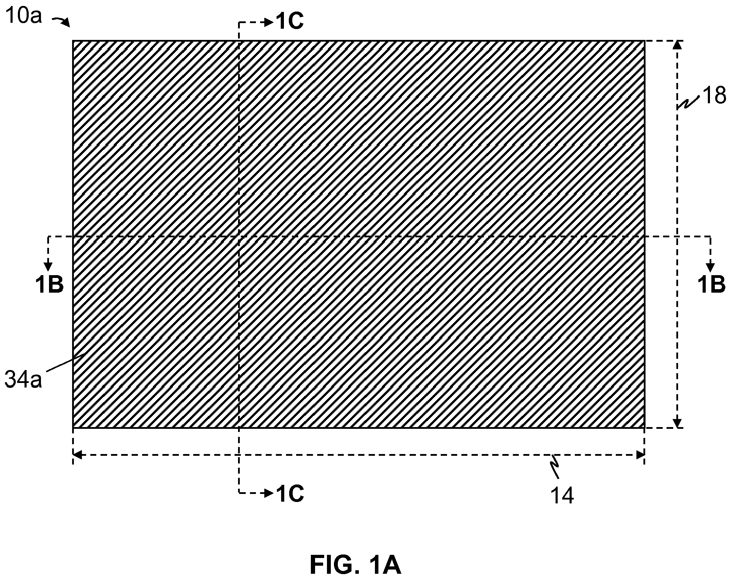

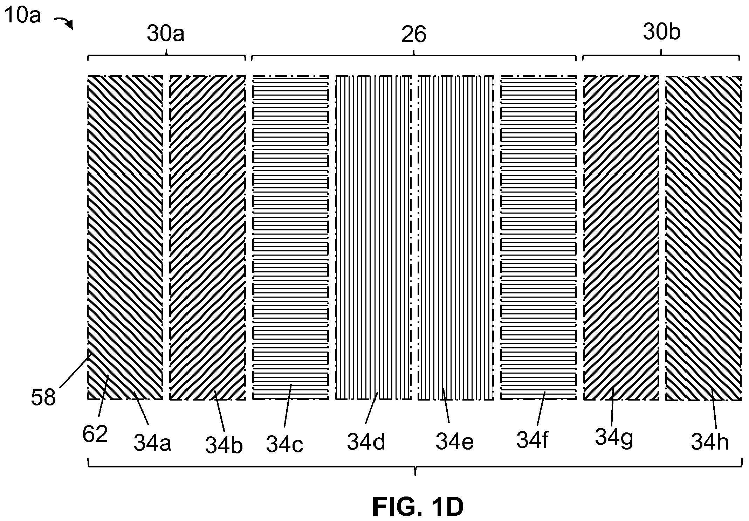

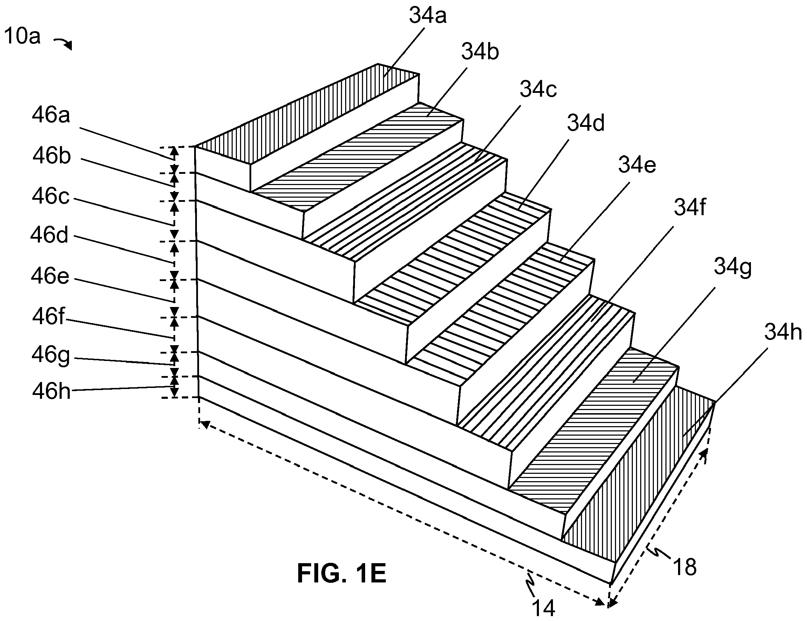

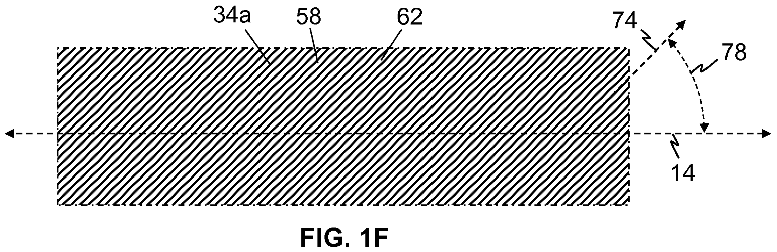

The present laminates can be used in a variety of applications in which a thin, high-stiffhess laminate is desirable, including, for example, in the production of vehicle components, aircraft components, consumer electronics components, and/or the like. Provided by way of example, FIGs. 1A-1E depict one embodiment 10a of the present laminates that is configured for use in a portable electronic device housing. More particularly, laminate 10a is for use in an A cover (e.g., 134) of a laptop housing (e.g., 110) (described in more detail below); however, other embodiments of the present laminates can be used in any suitable portable electronic device housing, such as, for example, a mobile phone, digital assistant, pager, tablet, media player, handheld gaming device, camera, watch, navigation device, and/or the like housing.

The present laminates can be dimensioned and shaped according to their respective applications. For example, laminate 10a includes a length 14 and a width 18 that is perpendicular to and smaller than the length. Length 14 and width 18 are each a distance measured between outer edges of the laminate along a straight line; the length can be, but need not be, the largest such distance. Length 14 can be greater than or substantially equal to any one of, or between any two of: 25, 26, 27, 28, 29, 30, 31, 32, 33, 34, or 35 centimeters (cm) (e.g., approximately 33.5 cm) and/or greater than or substantially equal to any one of, or between any two of: 1.10, 1.15, 1.20 1.25, 1.30, 1.35, 1.40, 1.45, 1.50, 1.55, 1.60, 1.65, 1.70, 1.75, or 1.80 times width 18 (e.g., between approximately 1.3 and approximately 1.7 times the width or approximately 1.45 times the width). Width 18 can be greater than or substantially equal to any one of, or between any two of: 14, 15, 16, 17, 18, 19, 20, 21, 22, 23, 24, 25, 26, 27, 28, 29, or 30 cm (e.g., approximately 23 cm). Laminate 10a is rectangular; however, other embodiments of the present laminates can be triangular, square, or otherwise polygonal (whether having sharp and/or rounded corners), circular, elliptical, or otherwise rounded, or can have an irregular shape. Some embodiments of the present laminates can include one or more openings, notches, and/or the like, which can facilitate incorporation of the laminate into a structure. To illustrate, in embodiments of the present laminates for use in a housing of a portable electronic device, such opening(s), notch(es), and/or the like can allow for mounting and/or operation of other component(s) (e.g., button(s), other user-input device(s), camera(s), and/or the like) of the portable electronic device.

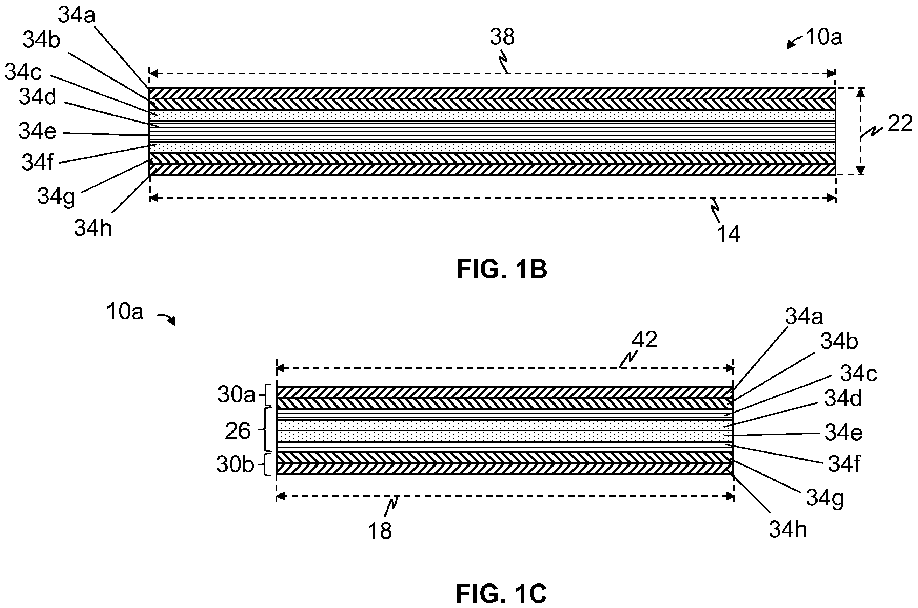

Laminate 10a has a thickness 22 (FIG. 1B) that is measured perpendicularly to both length 14 and width 18. Thickness 22 can be less than or substantially equal to any one of, or between any two of: 0.5, 0.6, 0.7, 0.8, 0.9, 1.0, 1.1, 1.2, 1.3, 1.4, 1.5, 1.6, 1.7, 1.8, 1.9, or 2.0 millimeters (mm) (e.g., approximately 0.9 mm). For laminate 10a, thickness 22 is substantially uniform throughout the laminate; however, other embodiments of the present laminates can have a varying thickness. As described below, embodiments of the present laminates, at least via selection of their respective laminae, can have relatively high resistances to deflection at such relatively low thicknesses.

The present laminates are laminates that each includes laminae (e.g., 34a-34h) that have been consolidated (e.g., using heat and/or pressure). Laminate 10a includes eight laminae 34a-34h; however, other embodiments of the present laminates can include any suitable number of laminae (e.g., 2, 3, 4, 5, 6, 7, 8, 9, 10, 11, 12, 13, 14, 15, or more laminae).

Each of laminae 34a-34h has a length 38 and a width 42 that is perpendicular to and smaller than the length, where the length and the width are each a distance between outer edges of the lamina measured along a straight line (labeled for lamina 34a in FIGs. 1B and 1C). Length 38 can be, but need not be, the largest such distance. Each of the laminae has a shape and dimensions that correspond to the shape and dimensions of laminate 10a. To illustrate, for each of the laminae, length 38 is aligned with and substantially equal to length 14 of laminate 10a, and width 42 is aligned with and substantially equal to width 18 of the laminate. As used herein, "aligned with" means within 10 degrees of parallel to. To further illustrate, the largest face of each of the laminae has a surface area that is substantially equal to a surface area of the largest face of laminate 10a. To yet further illustrate, each of the laminae is rectangular. In other embodiments, one or more laminae of a laminate can have a shape and/or dimensions that differ from the shape and/or dimensions of the laminate; such lamina(e) can, for example, be used to add stiffness and strength to a portion of the laminate that is smaller than the entirety of the laminate, as described in further detail below.

Each of laminae 34a-34h includes fibers 58 dispersed within a matrix material 62. Fibers (e.g., 58) of the present laminates (e.g., 10a) can include any suitable fibers, such as, for example, carbon fibers, glass fibers, aramid fibers, polyethylene fibers, polyester fibers, polyamide fibers, ceramic fibers, basalt fibers, steel fibers, and/or the like. Matrix materials (e.g., 62) of the present laminates (e.g., 10a) can include thermoplastic and/or thermoset materials. For example, a suitable thermoplastic material can include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. For further example, a suitable thermoset material can include an unsaturated polyester resin, a polyurethane, bakelite, duroplast, urea-formaldehyde, diallyl-phthalate, epoxy resin, an epoxy vinylester, a polyimide, a cyanate ester of a polycyanurate, dicyclopentadiene, a phenolic, a benzoxazine, a co-polymer thereof, or a blend thereof. Laminae (e.g., 34a-34h) including fibers (e.g., 58) can have a pre-consolidation fiber volume fraction (V_{f}) that is greater than or substantially equal to any one of, or between any two of: 40, 45, 50, 55, 60, 65, 70, 75, 80, 85, or 90%. In some embodiments of the present laminates, one or more laminae may not include fibers (e.g., 58); such lamina(e) can, for example, comprise a sheet of a matrix material (e.g., 62).

Embodiments of the present laminates can achieve relatively high resistances to deflection at least via selection of their respective laminae and appropriate layering thereof. In laminate 10a, each of laminae 34a-34h is a unidirectional lamina, or a lamina having fibers 58, substantially all of which are aligned in a single direction (hereinafter, "fiber direction"). Laminate 10a has an inner section 26 and first and second outer sections 30a and 30b disposed on opposing sides of the inner section. Inner section 26 includes laminae 34c-34f, and first and second outer sections 30a and 30b include laminae 34a-34b and 34g-34h, respectively. In each of the laminae of inner section 26, fibers 58 are aligned with either length 14 of laminate 10a (e.g., laminae 34d and 34e, each of which may be characterized as a 0-degree unidirectional lamina) or width 18 of the laminate (e.g., laminae 34c and 34f, each of which may be characterized as a 90-degree unidirectional lamina). In each of the laminae of outer sections 30a and 30b (e.g., laminae 34a-34b and 34g-34h, each of which may be characterized as an off-axis lamina), fibers 58 are aligned in a direction 74 angularly disposed at an angle of at least 10 degrees relative to each of length 14 and width 18 of laminate 10a. More particularly, a smallest angle 78 (hereinafter, "fiber angle") between fiber direction 74 and length 14 of laminate 10a (labeled for lamina 34a in FIG. IF) can be greater than or substantially equal to any one of, or between any two of: 10, 15, 20, 25, 30, 35, 40, 45, 50, 55, 60, 65, 70, 75, 80 degrees (e.g., 45 degrees). The 0-degree and 90-degree unidirectional laminae can provide directional stiffness along length 14 and width 18 of laminate 10a, and the off-axis laminae can increase the shear modulus of laminate 10a. All else being equal, providing off-axis laminae within outer sections 30a and 30b, rather than within inner section 26, may result in a better resistance to deflection.

In each of outer sections 30a and 30b, fiber direction 74 of one of the off-axis laminae (e.g., 34a or 34h) is perpendicular to the fiber direction of the other of the off-axis laminae (e.g., 34b or 34g). By way of illustration, laminae 34a and 34h can each have a fiber angle of 45 degrees measured counterclockwise from length 14 (each of which may be characterized as a -45-degree lamina) and laminae 34b and 34g can each have a fiber angle of 45 degrees measured clockwise from length 14 (each of which may be characterized as a +45-degree lamina). In inner section 26, 0-degree unidirectional laminae 34d and 34e and 90-degree unidirectional laminae 34c and 34f are stacked such that the 0-degree unidirectional laminae are in contact with one another (meaning each is in contact with at least one other) and are disposed between the two 90-degree unidirectional laminae. Laminate 10a therefore is arranged in a -45, +45, 90, 0, 0, 90, +45, -45 layup.

While laminate 10a comprises laminae arranged in the above-described symmetric lay-up, other embodiments of the present laminates can have laminae arranged in any suitable lay-up, whether symmetric or asymmetric. Without limitation, different lay-ups can be achieved by varying the number of laminae in the inner section (e.g., 26) and/or outer sections (e.g., 30a and 30b) of the laminate, each of which can comprise greater than or equal to, or between any two of: 1, 2, 3, 4, 5, 6, 7, 8, 9, 10, 11, 12, 13, 14, 15, or more laminae. The sections can each have the same or a different number of laminae. Additionally, or alternatively, different lay-ups can be achieved by varying the order in which laminae are layered. For example, any two adjacent laminae of the laminate can comprise laminae having the same fiber direction or different fiber directions. And, for each of the outer sections of the laminate, the fiber directions of at least two off-axis laminae can be disposed at a perpendicular or a non-perpendicular angle relative to one another. For example, such an angle can be greater than or substantially equal to any one of, or between any two of: 10, 15, 20, 25, 30, 35, 40, 45, 50, 55, 60, 65, 70, 75, 80, 85, or 90 degrees. Alternatively, the fiber directions of the off-axis laminae can be substantially the same.

In laminate 10a, each of laminae 34a-34h can have a pre-consolidation thickness (e.g., 46a-46h, respectively) that is between approximately 0.08 mm and approximately 0.16 mm (FIG. IE). In other embodiments of the present laminates, laminae can each include any suitable thickness, such as, for example, a pre-consolidation thickness that is greater than or substantially equal to any one of, or between any two of: 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.30, 0.35, 0.40, 0.45, or 0.50 mm. The thicknesses of the laminae need not be the same. For example, at least one of the lamina(e) of the inner section can have a thickness (e.g., at least one of 46c-46f) that is at least 10%, 20%, 30%, 40%, 50%, 60%, 70%, or 90% larger than the thickness of at least one of the lamina(e) of the outer sections (e.g., at least one of 46a-46b and 46g-46h) and/or of at least another one of the lamina(e) of the inner section. To illustrate, each of thicknesses 46d-46f can be between approximately 0.14 and 0.16 mm and each of thicknesses 46a-46b and 46g-46h can be between approximately 0.09 and 0.11 mm. For further example, the sum of thicknesses 46a, 46b, 46g, and 46h can be approximately 40% of the total thickness of laminate 10a.

A desired resistance to deflection can be achieved while maintaining a minimum laminate thickness (e.g., 22) at least by selecting, for each of the laminae, an appropriate lamina thickness based on the dimensions of the laminate. Lamina(e) (e.g., 34c and 34f) having fibers aligned with the width (e.g., 18) of the laminate, which is shorter than the length (e.g., 14), can be relatively thicker. Lamina(e) (e.g., 34d and 34e) having fibers aligned with the length of the laminate can be relatively thinner. And off-axis lamina(e) (e.g., 34-34b and 34g-34h), which may provide resistance to shear deformation, can also be relatively thinner. Such relative sizing may permit some of the present laminates to be thinner than a laminate that, while otherwise similar, and while having substantially the same resistance to deflections, comprises laminae having the same thickness.

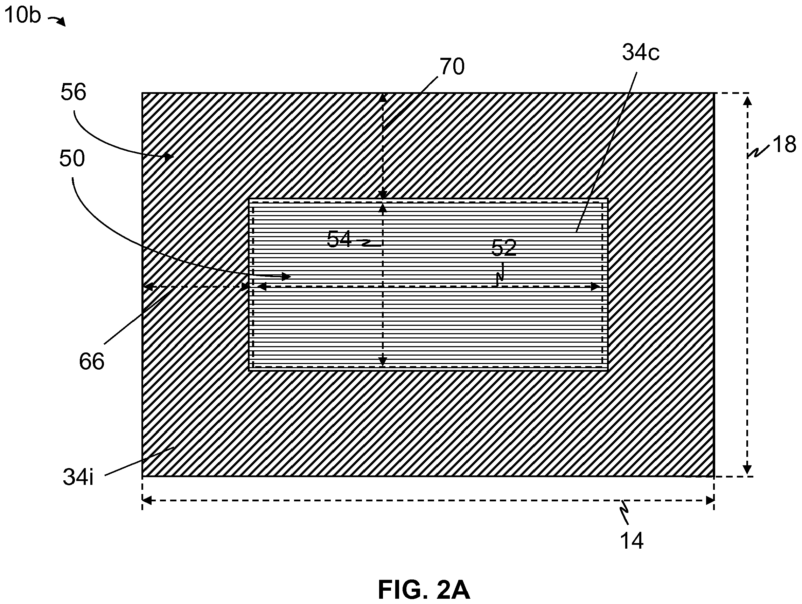

Referring to FIGs. 2A-2C, in some embodiments of the present laminates, the off-axis lamina(e) (e.g., 34i, 34j-34m, or 34n-34q) of each of the outer sections (e.g., 30a and 30b) can have a different shape and/or size than the laminate (e.g., 10b, 10c, or 10d). More particularly, such off-axis lamina(e) can have a smaller surface area than the lamina(e) of the inner section (e.g., 26) and can be positioned proximate to the edges of the laminate. Off-axis lamina(e) sized and positioned in this manner can provide improved shear resistance to certain portions of the laminate. Such targeted strengthening can promote improved resistance to deflections while minimizing the addition weight.

Provided by way of illustration, laminates 10b, 10c, and 10d can each be substantially similar to laminate 10a, with the primary exception being the shape and size of the off-axis lamina(e) (e.g., 34i, 34j-34m, or 34n-34q). Referring first to laminate 10b (FIG. 2A), off-axis lamina 34i can be disposed within the bounds of a border portion 56 that extends from the perimeter of a center portion 50 to the perimeter of the laminate. As shown, lamina 34i is positioned along the edges of laminate 10b, spans substantially all of an area defined by border portion 56, and surrounds center portion 50. As such, lamina 34i does not overlie the portions of lamina 34c that are disposed within the bounds of center portion 50.

Center portion 50 can have a length 52 that is aligned with length 14 of laminate 10b and is at least 10% smaller, for example at least 10%, 20%, 30%, 40%, 50%, 60%, 70%, 80%, or 90% smaller, than length 14. Center portion 50 can also have a width 54 that is aligned with width 18 of laminate 10b and is at least 10% smaller, for example at least 10%, 20%, 30%, 40%, 50%, 60%, 70%, 80%, or 90% smaller, than width 18. Border portion 56 can have a first width 66 and a second width 70 measured parallel to length 14 and width 18, respectively.

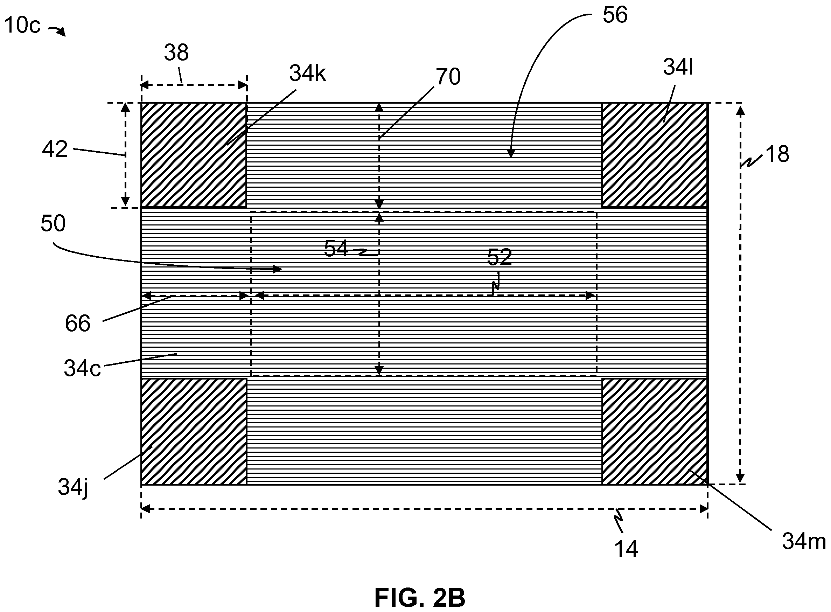

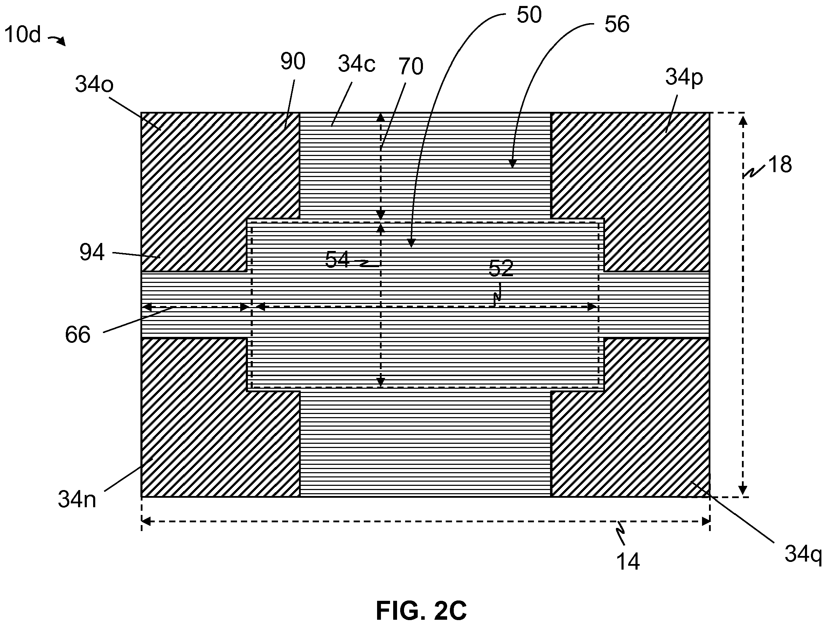

In other embodiments (e.g., 10c or 10d), the off-axis lamina(e) (e.g., 34j-34m or 34n-34q) need not span the entire area defined by the border portion (e.g., 56). Referring to laminate 10c (FIG. 2B), off-axis laminae 34j-34m can each be positioned within the bounds of border portion 56 and at a respective corner of the laminate. Each of laminae 34j-34m can have a length 38 less than or equal to first width 66 and a width 42 less than or equal to second width 70. As shown, at least some portions of lamina 34c that are disposed within the bounds of border portion 56 are not overlaid by laminae 34j-34m. Referring to laminate 10d (FIG. 2C), off-axis laminae 34n-34q can be substantially similar to laminae 34j-34m, with the primary exception being that each of laminae 34n-34q has one or more portions 90 that extend along length 14 and beyond first width 66 and/or one or more portions 94 that extend along width 18 and beyond second width 70 while remaining within the bounds of border portion 56.

Laminates 10b-10d are provided by way of example, and not by way of limitation. The off-axis lamina(e), center portion, and border portion of some the present laminates can each can be triangular, rectangular, square, or otherwise polygonal (whether having sharp and/or rounded corners), circular, elliptical, or otherwise rounded, or can have an irregular shape. Additionally, some of present laminates can be layered such that each of the outer sections has one or more sub-stacks of any of the above-described off-axis laminae. For example, an outer section can comprise a sub-stack of two or more laminae, each substantially similar to lamina 34i. By way of another example, an outer section can comprise multiple sub-stacks, each comprising two or more laminae substantially similar to any of laminae 34j-34m or 34n-34q. Each of such sub-stack(s) can be layered in an order to achieve a suitable lay-up, as described above with respect to laminate 10a.

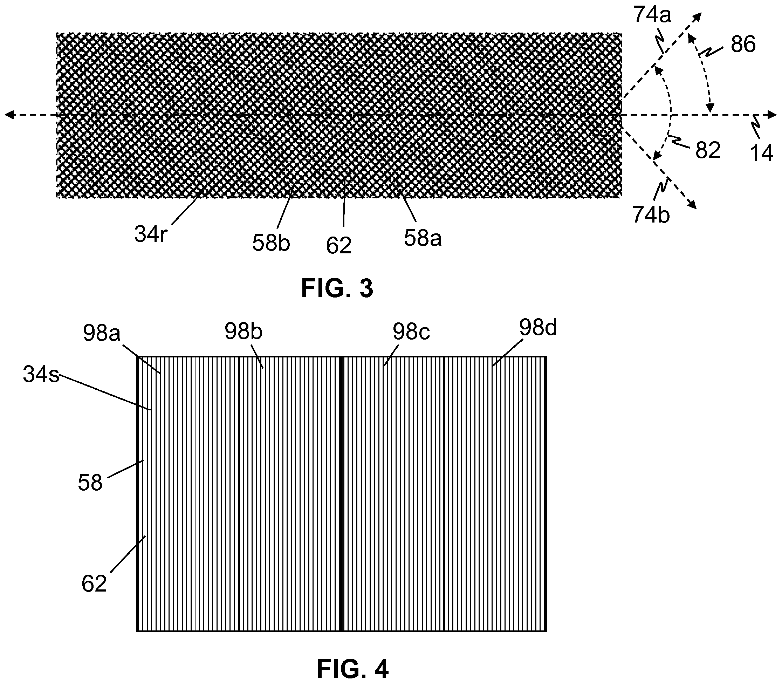

In some embodiments of the present laminates, the inner section and/or at least one of the outer sections can have one or more laminae, each having fibers that define a woven structure (e.g., as in a lamina having a plane, twill, satin, basket, leno, mock leno, or the like weave). For example, and referring additionally to FIG. 3, lamina 34r includes a first set of fibers 58a aligned in a first direction 74a and a second set of fibers 58b aligned in a second direction 74b that is angularly disposed relative to the first direction, where the first set of fibers is woven with the second set of fibers. A smallest angle 82 between first direction 74a and second direction 74b can be greater than or substantially equal to any one of, or between any two of: 10, 15, 20, 25, 30, 35, 40, 45, 50, 55, 60, 65, 70, 75, 80, 85, or 90 degrees. A smallest angle 86 between first direction 74a and a length (e.g., 14) of a laminate including lamina 34r can be greater than or substantially equal to any one of, or between any two of: 0, 5, 10, 15, 20, 25, 30, 35, 40, 45, 50, 55, 60, 65, 70, 75, 80, 85, or 90 degrees.

Some embodiments of the present laminates can include one or more laminae, each formed from sections of lamina material. For example, FIG. 4 depicts a unidirectional lamina 34s formed from sections (e.g., 98a-98d) of unidirectional fiber tape that have been placed adjacent to one another. To form such a lamina (e.g., 34s), sections (e.g., 98a-98d) of lamina material can be placed adjacent to one another manually and/or by an automated tape laying machine.

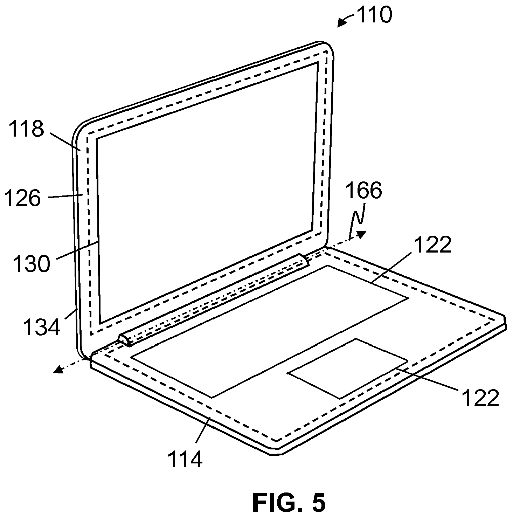

Referring additionally to FIG. 5, shown is a schematic perspective view of one embodiment 110 of the present laptop housings. Laptop housing 110 includes a base 114 and a lid 118 that can be movably (e.g., hingedly, in this embodiment) coupled to the base. Each of base 114 and lid 118 can be characterized as a thin-walled (e.g., on the order of mm) shell configured to receive laptop components. For example, laptop components receivable by base 114 can include a processor, motherboard, power supply, user-input device(s) (e.g., a keyboard, touchpad, and/or the like), cooling fan(s), and/or the like. To facilitate operation of such laptop components once they are received by base 114, the base can define one or more openings 122 in communication with its interior (e.g., to allow user access to the user-input device(s), permit airflow to and/or from the cooling fan(s), allow external device(s) to be connected to the motherboard, and/or the like). Base 114 can comprise an assembly of two or more portions (e.g., an upper portion and a lower portion), to, for example, facilitate receipt of such laptop components by the base (e.g., during assembly of a laptop including the base).

Laptop components receivable by lid 118 can include a screen, user-input device(s) (e.g., a camera, microphone, and/or the like), and/or the like. For example, lid 118 can include a frame 126 defining an opening 130, where a laptop screen can be coupled to the frame such that the screen is viewable by a user through the opening. To increase the stiffness and strength of lid 118, facilitate receipt of a laptop screen by the lid, and/or for aesthetic purposes, the lid can include an A cover 134 (described in more detail below) configured to be coupled to frame 126. A cover 134 can be coupled to frame 126 in any suitable fashion, such as, for example, via interlocking features of the A cover and the frame (e.g., such as snap-fit connection(s)), fastener(s), adhesive, welding, and/or the like. In some embodiments, an A cover (e.g., 134) of a lid (e.g., 118) can be unitary with a frame (e.g., 126) of the lid.

It is desirable for a laptop housing (e.g., 110) to be sufficiently stiff to protect components received by the laptop housing against damage as well as to be relatively small (e.g., thin-walled), light, and inexpensive. Some embodiments of the present laptop housings (e.g., 110) can achieve such advantageous characteristics by including embodiment(s) of the present laminates (e.g., any of 10a-10d). For example, in some of the present laptop housings (e.g., 110), laminate(s) (e.g., any of 10a-10d) can be disposed within, on, and/or can form at least a portion of a wall of the laptop housing (e.g., a wall of a base 114 and/or a wall of a lid 118). To illustrate, in laptop housing 110, such laminate(s) (e.g., any of 10a-10d) can be disposed within, on, and/or can form at least a portion of an upper wall and/or a lower wall of base 114 and/or lid 118 (generally indicated with dashed lines in FIG. 5).

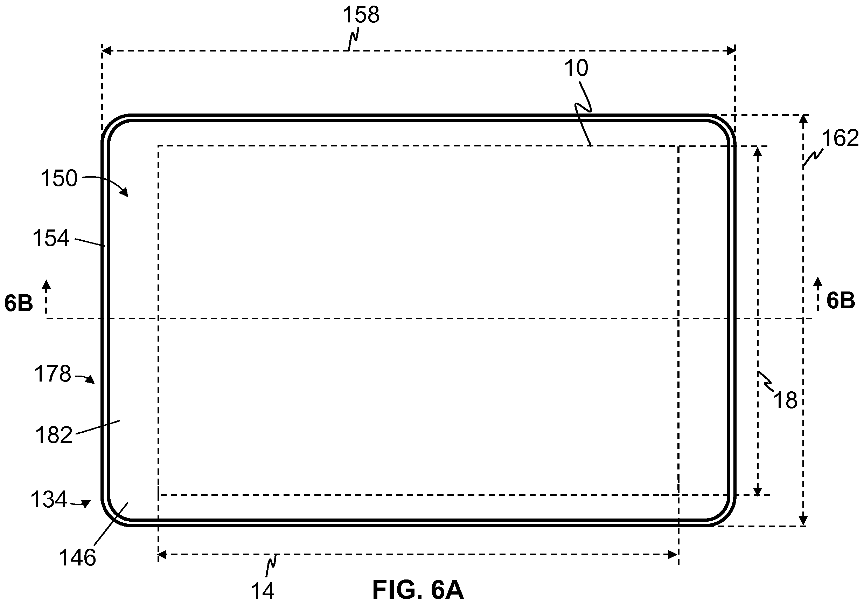

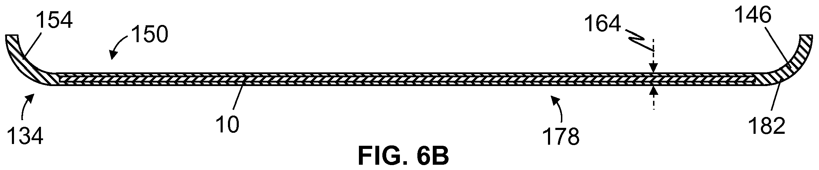

To further illustrate, and referring additionally to FIGs. 6A and 6B, shown are bottom and cross-sectional end views of A cover 134. A cover 134 includes a plate 146. Plate 146 can have a planar portion 150 and a lip 154 that extends outwardly from and surrounds at least a majority of the planar portion. Plate 146 has a length 158 and a width 162 that is perpendicular to and smaller than the length. Length 158 and width 162 are each a distance measured between outer edges of plate 146 along a straight line. More particularly, length 158 can be measured along a line that bisects plate 146, is perpendicular to the outer edges of the plate through which it extends, is aligned with an axis about which lid 118 is rotatable relative to base 114 (e.g., hinge axis 166, FIG. 5), and/or the like. In this embodiment, plate 146 is rectangular, having rounded corners (e.g., and length 158 can be measured along a line that is aligned with its longest sides); however, in other embodiments, a plate (e.g., 146) can be triangular, rectangular, square, or otherwise polygonal (whether having sharp and/or rounded corners), circular, elliptical, or otherwise rounded, or can have an irregular shape.

A cover 134 can include a composite body 178 that defines plate 146. Body 178 can be characterized as "composite" in that the body includes a plastic material 182 and a laminate (e.g., any of 10a-10d), where the plastic material and the laminate are combined to form a unitary structure. As one non-limiting example, composite body 178 can be formed by overmolding plastic material 182 onto the laminate; in some embodiments, the laminate can be glued, welded, and/or the like to the plastic material. Plastic material 182 can include any suitable plastic material, including any one or more of the thermoplastic and thermoset materials described above. Plastic material 182 can include dispersed elements, such as, for example, discontinuous or short fibers (e.g., of any type described above), which can account for 10 to 70% of the plastic material by weight. In some embodiments, a plastic material (e.g., 182) can include the same material as a matrix material (e.g., 62) of the laminate, which can facilitate a bond between the plastic material and the laminate.

In this embodiment, a laminate (e.g., any of 10a-10d) can be positioned within composite body 178 such that the laminate is disposed within and/or on plate 146. More particularly, a length (e.g., 14) of the laminate can be aligned with length 158 of plate 146. To illustrate, if the laminate is laminate 10a, fibers of 0-degree unidirectional laminae 34d and 34e can be aligned with length 158 of plate 146, and fibers of 90-degree unidirectional laminae 34c and 34f can be aligned with width 162 of the plate. The length of the laminate disposed within and/or on plate 146 can be at least 50% (up to and including 100%) of length 158 of the plate (e.g., at least 50, 55, 60, 65, 70, 75, 80, 85, 90, or 95% of the length of the plate). A width (e.g., 18) of the laminate disposed within and/or on plate 146 can be at least 50% (up to and including 100%) of width 162 of the plate (e.g., at least 50, 55, 60, 65, 70, 75, 80, 85, 90, or 95% of the width of the plate). A thickness (e.g., 22) of the laminate disposed within and/or on plate 146 can be at least 50% (up to and including 100%) of a thickness 164 (FIG. 6B) of the plate (e.g., at least 50, 55, 60, 65, 70, 75, 80, 85, 90, or 95% of the width of the plate). Outer surface(s) of plate 146 can be defined by plastic material 182 and/or the laminate.

Some embodiments of the present methods comprise producing a laminate (e.g., any of 10a-10d) at least by layering two or more laminae (e.g., including one or more of any lamina described above) to define a stack. Layering can be performed such that the stack includes an inner section (e.g., 26) and first and second outer sections (e.g., 30a and 30b) disposed on opposing sides of the inner section. The inner section can have one or more first unidirectional lamina(e) (e.g., 34d and 34e) and one or more second unidirectional lamina(e) (e.g., 34c and 34f) and the outer sections can each include one or more third lamina(e) (e.g., any of 34a, 34b, and 34g-34q). Layering can be performed such that: (1) fibers of the first lamina(e) are aligned in a first direction, (2) fibers of the second lamina(e) are aligned in a second direction that is perpendicular to the first direction, and (3) fibers of each of the third lamina(e) of each of the outer sections are disposed in a third direction that is angularly disposed at an angle of at least 10 degrees relative to each of the first and second directions. Such layering can be performed manually and/or using a laminate stacking machine. In some methods, layering is performed such that, in each of the outer sections, for at least one of the third lamina(e), the third direction is angularly disposed at an angle of approximately 45 degrees relative to each of the first and second directions.

In some methods, producing the laminate comprises applying heat and/or pressure to the stacked laminae (e.g., using a press). In some methods, producing the laminate comprises trimming at least one of the laminae, which can be performed before, during, and/or after stacking the laminae and/or before and/or after applying heat and/or pressure to the stacked laminae.

In some methods, producing the laminate is performed such that the laminate has: (1) a length (e.g., 14) that is aligned with the first direction and (2) a width (e.g., 18) that is aligned with the second direction, the length being at least 10% longer than the width.

Some methods comprise producing a laptop A cover (e.g., 134) by overmolding a plastic material (e.g., 182) onto the laminate. For example, the laminate can be placed into a mold, and the plastic material can be injected into the mold, thereby overmolding the plastic material onto the laminate.

### EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

### EXAMPLE 1

### Deflection Simulation of Plates

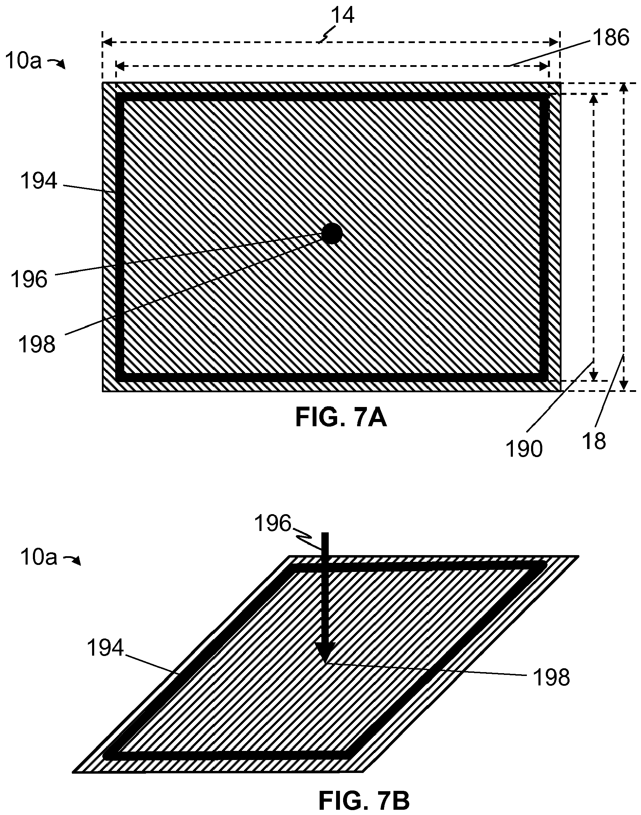

Referring now to FIGs. 7A and 7B, a deflection of a laminate (e.g., 10a) or a plate of another material can be simulated by modelling a load 196 applied perpendicularly to and at a center 198 of the laminate or plate while the sides of the laminate or plate are simply supported by frame 194. For the following examples, load 196 was modelled as 100 N and each of the laminates and plates was modelled to have a length (e.g., 14) of 33.5 cm and a width (e.g., 18) of 23 cm. The support frame was modelled to have a length (e.g., 186) of 31 cm and a width (e.g., 190) of 21 cm.

### EXAMPLE 2

### Comparative Analysis of Laminate 10a and Other Laminates and Plates

A finite element analysis (FEA) was performed to compare the performance of laminate 10a, three reference laminates, an aluminum plate, and a magnesium plate (described in TABLE 1) when such laminates and plates were subjected to the conditions of EXAMPLE 1.

**TABLE 1: Plates Modelled for Comparative Analysis**

| **Laminate or Plate** | **Description of Material or Lay-Up** | **Thickness (mm)** | **Volume (cubic centimeters (cc))** | **Density** | **Weight (grams (g))** | **Weight per Unit Area** | **Normalized Weight** | **Normalized Thickness** |
|---|---|---|---|---|---|---|---|---|
| Al | Aluminum | 0.65 | 50.4 | 2.70 | 136 | 1.77 | 1.00 | 1.00 |
| Mg | Magnesium | 0.88 | 67.8 | 1.81 | 123 | 1.59 | 0.90 | 1.35 |
| Reference Laminate 1 | Fabric Layers | 1.22 | 94.2 | 1.42 | 134 | 1.74 | 0.98 | 1.87 |
| Reference Laminate 2 | Same as Reference Laminate 3, but with layers having lower fiber volume fractions | 1.07 | 82.4 | 1.47 | 121 | 1.57 | 0.89 | 1.63 |
| Reference Laminate 3 | 90°, 0°, 90°; Carbon Fibers | 1.00 | 77.1 | 1.50 | 115 | 1.50 | 0.85 | 1.53 |
| Laminate 10a | -45°, +45°, 90°,0°,0°, 90°, +45°, - 45°; Carbon Fibers | 0.67 | 51.7 | 1.52 | 79 | 1.02 | 0.58 | 1.03 |

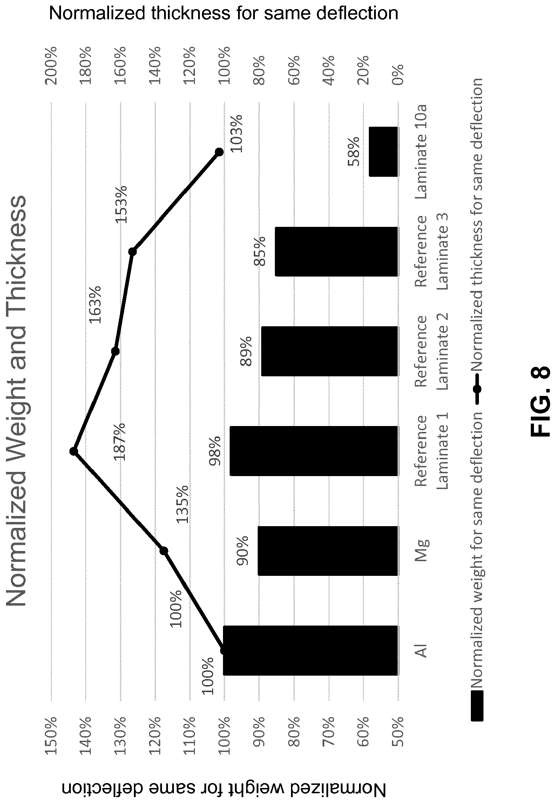

Each of the above was modelled to have a thickness such that each of the laminates and plates exhibited the same maximum deflection in the analysis, from which a corresponding weight of the laminate or plate was calculated. FIG. 8 is a graph showing the normalized thickness and weight of each of the laminates and plates using the aluminum plate as a reference. Each of the laminates was lighter than the aluminum plate; however, each of the Reference Laminates had a larger thickness than the aluminum plate. Laminate 10a, on the other hand, had essentially the same thickness as the aluminum plate and also provided the greatest weight savings over the aluminum plate.

### EXAMPLE 3

### Shear Analysis of the Aluminum Plate, Reference Laminate 3, and Laminate 10a

The shear strain fields were calculated for each of the aluminum plate, Reference Laminate 3, and laminate 10a based on the FEA of EXAMPLE 2. Reference Laminate 3 exhibited less resistance to shear deformation than the aluminum plate, at least in part because Reference Laminate 3 consisted of 90-degree and 0-degree unidirectional laminae. By contrast, laminate 10a and the aluminum plate had similar shear responses, at least in part because the ±45 degree laminae of laminate 10a promoted a relatively higher shear modulus.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A laminate comprising:
a plurality of unidirectional laminae, each having:
a matrix material; and
fibers dispersed within the matrix material;
wherein the laminae are layered such that the laminate includes:
an inner section having:
one or more first ones of the laminae, the fibers of each of the first lamina(e) being aligned in a first direction that is parallel to a length of the laminate, the length of the laminate being perpendicular to and at least 10% longer than a width of the laminate; and
one or more second ones of the laminae, the fibers of each of the second lamina(e) being aligned in a second direction that is perpendicular to the first direction; and
first and second outer sections disposed on opposing sides of the inner section, each of the outer sections including one or more third ones of the laminae, the fibers of each of the third lamina(e) being aligned in a third direction that is angularly disposed at an angle of at least 10 degrees relative to each of the first and second directions.

2. The laminate of claim 1, wherein, in each of the outer sections, for at least one of the third lamina(e), the third direction is angularly disposed at an angle of approximately 45 degrees relative to each of the first and second directions.

3. The laminate of claim 1 or 2, wherein, in each of the outer sections:
the third direction of at least one of the third lamina(e) is angularly disposed at an angle of at least 10 degrees relative to the third direction of at least one other of the third lamina(e); and
optionally, the angle is approximately 90 degrees.

4. The laminate of any of claims 1-3, wherein, in each of the outer sections, the lamina(e) consist of the third lamina(e).

5. The laminate of any of claims 1-4, wherein at least one of the first lamina(e) is disposed between two of the second lamina(e).

6. The laminate of any of claims 1-5, wherein none of the second lamina(e) are disposed between any two of the first lamina(e).

7. The laminae of any of claims 1-6, wherein the laminae in the inner section consist of the first lamina(e) and the second lamina(e).

8. The laminate of any of claims 1-7, wherein the length is between approximately 25 centimeters (cm) and approximately 35 cm.

9. The laminate of any of claims 1-8, wherein:
the laminate has:
a center portion having a length and a width, wherein the length of the center portion is parallel to and at least 10% smaller than the length of the laminate and the width of the center portion is parallel to and at least 10% smaller than the width of the laminate; and
a border portion disposed around the center portion and extending from the perimeter of the center portion to the perimeter of the laminate; and
for at least one of the outer sections, the third lamina(e) are disposed within the border portion and not within the center portion.

10. The laminate of any of claims 1-9, wherein the laminate has a thickness that is perpendicular to each of the width and the length, the thickness being between approximately 0.8 millimeters (mm) and approximately 1.5 mm.

11. A portable electronic device housing comprising:
a composite plate having a width and a length that is perpendicular to and at least 10% longer than the width, the plate including:
a plastic material; and
a laminate coupled to the plastic material and including a plurality of unidirectional laminae, each having fibers dispersed within a matrix material, the laminae being layered such that the laminate includes:
an inner section having:
one or more first ones of the laminae, the fibers of each of the first lamina(e) being aligned in a first direction that is parallel to a length of the laminate, the length of the laminate being perpendicular to and at least 10% longer than a width of the laminate; and
one or more second ones of the laminae, the fibers of each of the second lamina(e) being aligned in a second direction that is perpendicular to the first direction; and
first and second outer sections disposed on opposing sides of the inner section, each of the outer sections including one or more third ones of the laminae, the fibers of each of the third lamina(e) being aligned in a third direction that is angularly disposed at an angle of at least 10 degrees relative to each of the first and second directions;
wherein the length of the laminate is parallel to the length of the plate.

12. The housing of claim 11, wherein the plate includes a planar portion and a lip that extends outwardly from and surrounds at least a majority of the planar portion.

13. The housing of claim 11 or 12, wherein, in each of the outer sections, for at least one of the third lamina(e), the third direction is angularly disposed at an angle of approximately 45 degrees relative to each of the first and second directions.

14. The housing of any of claims 11-13, wherein, in each of the outer sections:
the third direction of at least one of the third lamina(e) is angularly disposed at an angle of least 10 degrees relative to the third direction of at least one other of the third lamina(e); and
optionally, the angle is approximately 90 degrees.

15. The housing of any of claims 11-14, wherein:
the laminate has:
a center portion having a length and a width, wherein the length of the center portion is parallel to and at least 10% smaller than the length of the laminate and the width of the center portion is parallel to and at least 10% smaller than the width of the laminate; and
a border portion disposed around the center portion and extending from the perimeter of the center portion to the perimeter of the laminate; and
for at least one of the outer sections, the third lamina(e) are disposed within the border portion and not within the center portion.
